Europäisches Patentamt

European Patent Office

Office européen des brevets

(19)

(11) Publication number: **0 137 125**
**A2**

# EUROPEAN PATENT APPLICATION

(12)

(21) Application number: **84107681.3**

(22) Date of filing: **03.07.84**

(51) Int. Cl.⁴: **B 29 C 67/14**
B 29 C 67/22, B 29 C 43/02
//B29K71/00, B29K75/00,
B29K105/04, B29K105/08,
B29L31/30

(30) Priority: **02.08.83 IT 6783783**

(43) Date of publication of application:
**17.04.85 Bulletin 85/16**

(84) Designated Contracting States:
**DE FR GB SE**

(71) Applicant: **PIANFEI IPA S.p.A.**
**Via Cuneo, 27**
**I-12080 Pianfei (Province of Cuneo)(IT)**

(72) Inventor: **Gaggero, Attilio**
**Via Mombrisone 72**
**I-12013 Chiusa Pesio (Prov. of Cuneo)(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) **Method of manufacturing mouldable self-supporting panels, in particular preformed panels for motorvehicle interior finishing, and product obtained thereby.**

(57) A method is disclosed which consists of overlying a mat (M) of glass fibre with a sheet (F) of a very low density expanded polymeric material, such as Moltoprene, of spraying said sheet with an expansible two-component resin (E), isocyanate polyol, and of subjecting the whole to pressing in an embossed surface mould which forms the exposed surface of the finished product.

EP 0 137 125 A2

./...

Croydon Printing Company Ltd.

Fig.1

"METHOD OF MANUFACTURING MOULDABLE SELF-SUPPORTING PANELS, IN PARTICULAR PREFORMED PANELS FOR MOTORVEHICLE INTERIOR FINISHING, AND PRODUCT OBTAINED THEREBY"

This invention relates to a method of manufacturing mouldable self-supporting panels having distinct sound deafening and heat insulating properties, in particular preformed panels for motorvehicle interior finishing, and to a product obtained with the method.

As is known, panels of the type specified above are required to have, on the one side, good mechanical strength characteristics as dictated by the self-supporting ability to be imparted thereto, and on the other side, just as distinct features of lightweight, as well as sound deafening, heat insulation, and appealing aesthetics. These different features are generally conflicting ones in that mechanical strength depends on the density of the material used, while lightweight, sound deafening, and heat insulating properties are inversely proportional to density.

The problem is more acutely felt in the instance of self-supporting car body roof panels which, owing to their large size and liability to gravity actions and vibrations, if not made adequately rigid, tend to bend and form pockets and generally distort irreversibly with consequent separation from the car body sheet metal.

Such problems are further aggravated by the action of condensation water which forms on sheet metal and, by impregnating the panel material, significantly increases its weight.

The task of the present invention is therefore to obviate such shortcomings by providing a method of manufacturing mouldable self-supporting panels, in particular preformed panels for motorvehicle interior finishing, which can yield products of the type specified above which are significantly lighter in weight than conventional ones, while exhibiting a high mechanical strength, as well as good sound deafening and heat insulating properties.

This method permits fabrication of roof panels by moulding and more generally, preformed panels of very small thickness which are sufficiently elastic to be readily  assembled to a car body during the finishing thereof and have a weight per unit surface area in the 600 to 800 g/m$^2$ range.

This method of manufacture is economical both from the standpoint of installation and plant operation and the standpoint of cost of the finished product to be obtained with the method.

This task is accomplished by a method of manufacturing mouldable self-supporting panels, in particular preformed panels for motorvehicle interior finishing, characterized in that it comprises the steps of overlying a glass fibre mat (M) with a sheet of a very low density expanded polymeric material (F) of the open cell type, cutting the mat (M) and sheet (F) into pieces, depositing over said sheet pieces (F), as by spray application, a layer of a multi-component expansible resin (E), and subjecting the resulting product to a pressing step in a heated embossed surface (115a) mould (115) to directly emboss and/or microemboss the expanded polymeric material sheet surface (F) to be left exposed with a selected pattern.

Further features and advantages will be more readily appreciated from the following detailed description, with reference to the accompanying illustrative, and not limitative, drawings, where:

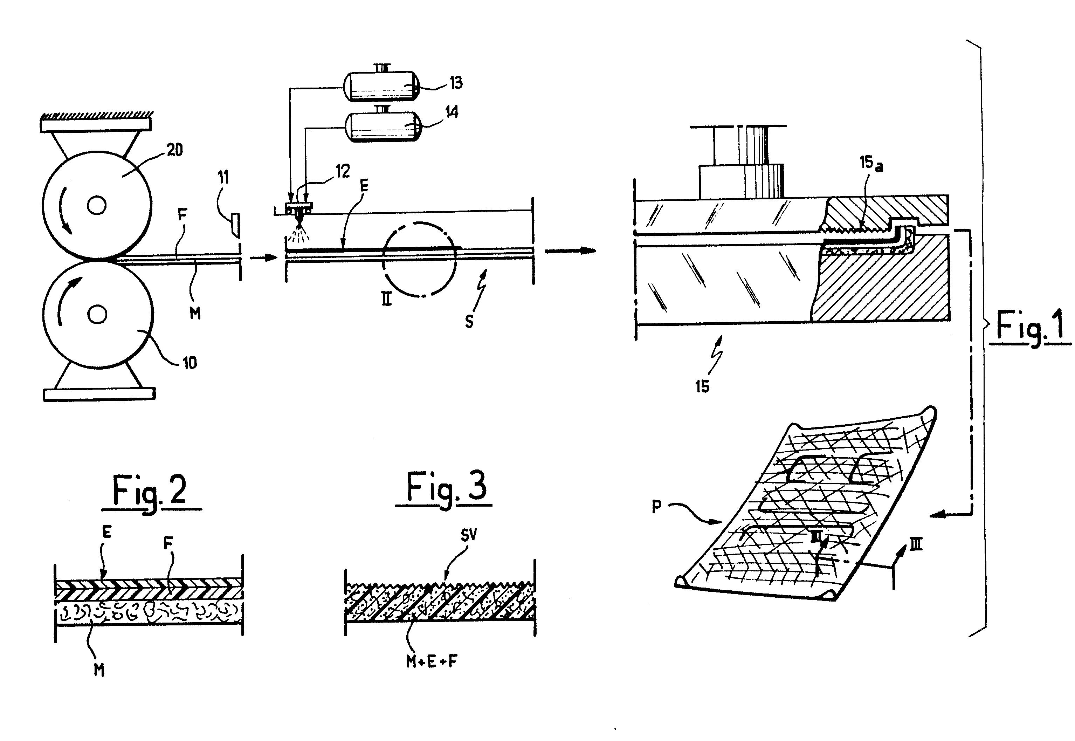

Figure 1 is a schematic view illustrating the different sequential steps of the method according to the invention;

Figure 2 is an enlarged detail view of Figure 1;

Figure 3 is a much enlarged schematic sectional view taken along the line III-III of Figure 1, illustrating the construction of the finished product.

In the drawings, 110 designates a continuous roll of glass fibre mat M, and 120 a similar roll of an expanded material F in sheet form. The glass fibre mat M is preferably of the unifilar type, having a weight per surface area unit in the 250 to 300 $g/m^2$ range, and the expanded material of the sheet F is selected from very low density materials of the open cell type, in particular a polyether known as "Moltoprene", the sheet thickness being in the 2 to 3.5 mm range.

Said mat and sheet are first overlaid and then subjected to the action of a cutter 111 which forms pieces S of a commensurate size to the finished product.

Onto the pieces S, there is deposited, by means of a mixing-spraying nozzle 112, a layer E of an expansible resin of the multi-component, preferably two-component type. Advantageously, the layer E comprises a polyurethane composed of a polyol and isocyanate which are supplied from separate tanks 113 and 114, and mixed in a manner known per se, directly upstream of the nozzle 112.

The ratio by weight between the polyol and isocyanate components is selected in the 100 to 120 range, and said components are also preferably additivated with a retarder effective to moderately slow down the component reaction after spraying, the retardation time being selected in the 1 to 3 minutes range.

After depositing the layer E, which operation shall have to be completed prior to the start of the resin expansion reaction, the piece is directly transferred into a moulding station ST and introduced, while in a pre-reaction or start-of-the-reaction condition, into a mould 115 of the double shell type.

The mould has its moulding surface 115a, facing the polyurethane layer E, embossed, the term embossed referring herein to any relief and/or micro-relief etched in the surface in conformity with a selected pattern such as rustication, with parallel ribs, as interwoven weft and warp, or imitation hide, or the like patterns.

Inside the mould 115, as heated to about 80°C, the resin will begin and/or continue and complete its expanding reaction, which is accompanied by an appreciable volume increase which forces the material to adhere on the mould surfaces and at the same time penetrate the glass fibre support.

Following shake-out and peripheral trimming, a finished product P is yielded wherein the material of the starting sheet F of Moltoprene is fully dispersed throughout the mat M, while the in-view surface SV exhibits a microporous structure and a negative embossing matching that of the mould moulding surface.

That product may be subsequently painted, or bulk dyed by dispersing pigments through the components of the resin forming the layer E.

The structure of the finished product just described represents the specific outcome of the method according to this invention, and in conjunction with a weight ranging between 600 and 800 $g/m^2$, characterizes said product.

Of course, within the same principle of this invention, the implementation details and embodiments thereof may be changed within broad limits with respect to what has been described and illustrated by way of non-limitative example, without departing from the true scope of the invention.

- 6 -                          0137125

CLAIMS

1. A method of manufacturing mouldable self-supporting panels, in particular preformed panels for motorvehicle interior finishing, characterised in that it comprises the steps of overlying a glass fibre mat with a sheet of a very low density expanded polymeric material of the open cell type, cutting the mat and sheet into pieces, depositing over said sheet pieces, as by spray application, a layer of a multi-component expansible resin, and subjecting the resulting product to a pressing step in a heated embossed surface mould to directly emboss and/or microemboss the expanded polymeric material sheet surface to be left exposed with a selected pattern.

2. A method according to Claim 1, wherein the pressing action results from the volume increase consequent to the expansion reaction of the two-component resin.

3. A method according to Claims 1 and 2, wherein said very low density expanded material comprises a polyether sheet known as "Moltoprene".

4. A method according to Claims 1 to 3, wherein the glass fibre mat is of the unifilar type and has a weight per unit surface area in the 250 to 350 $g/m^2$ range.

5. A method according to the preceding claims, wherein the sheet of expanded material overlaid to the glass fibre mat has a thickness in the 2 to 4 mm range.

6. A method according to the preceding claims, wherein the expansible multi-component resin comprises a two-component polyurethane having a ratio by weight of polyol to isocyanate in the 100 to 120 range.

7. A method according to the preceding claims, wherein at least one of the expansible resin components contains dyeing pigments dispersed therein for bulk dyeing the finished product.

8. A method according to any of Claims 1-7, characterized in that at least one of said expansible resin components contains a retarder.

9. A method according to Claim 8, wherein the retarder additivated to the expansible resin components acts with retardation times in the 1 to 3 minutes range.

10. A method according to the preceding claims, wherein the mould is heated to 80°.

11. A product obtained with the method according to Claims 1 to 10, characterized in that it comprises a glass fibre support wherethrough a very low density expanded material is dispersed to form a microporous exposed surface which is embossed and/or microembossed by direct moulding with any selected patterns.

12. A product according to Claim 11, characterized in that it has a weight per unit surface area in the 600 to 800 $g/m^2$ range.

13. A product according to Claims 11 and 12, characterized in that it forms a preformed panel, in particular a preformed panel for motorvehicle interior finishing.

Fig. 1

Fig. 2

Fig. 3

1/1

0137125